# DEMANDE DE BREVET EUROPEEN

(11) **EP 4 800 581 A1**
(43) Date de publication de la demande: **02.09.2026**
(21) Numéro de dépôt: 25305253.4
(22) Date de dépôt: 26.02.2025
(51) Int. Cl.: G06F 21/31, H04L 9/40

(54) **PROCÉDÉ ET SYSTÈME D'AUTHENTIFICATION D'UN UTILISATEUR POUR ACCÉDER À UN POSTE DE TRAVAIL**

(71) Demandeur: BULL SAS, 78340 Les Clayes-Sous-Bois (FR)
(72) Inventeur: GUIONNEAU, Christophe, 38000 Grenoble (FR); BORG, Olivier, 78640 Neauphle-le-Château (FR); GALIANA, Denis, 92250 La Garenne-Colombes (FR)
(74) Mandataire: IPAZ

(57) **Abrégé**

L'invention concerne un procédé (100) d'authentification d'un utilisateur sur un poste de travail, en vue de déverrouiller ledit poste de travail, ledit procédé (100) comprenant une phase d'authentification (110) comprenant les étapes suivantes :
- affichage (112), par ledit poste de travail, d'une page web d'un serveur d'identité, dit serveur IdP ;
- fourniture, par ledit utilisateur audit serveur IdP, et au travers de ladite page web, d'un identifiant et d'un mot de passe utilisateur ;
- authentification (118) dudit utilisateur en fonction desdits identifiant et mot de passe utilisateurs ;
- en cas d'authentification réussie, transmission par ledit serveur IdP audit poste de travail d'un mot de passe de déverrouillage dudit poste de travail ; et
- déverrouillage dudit poste de travail.

Elle concerne également un système d'authentification mettant en œuvre un tel procédé.

## Description

La présente invention concerne un procédé d'authentification d'un utilisateur pour accéder à un poste de travail, c'est-à-dire pour déverrouiller un poste de travail et ouvrir une session sur le système d'exploitation dudit poste de travail. Elle concerne également un programme d'ordinateur et un système mettant en œuvre un tel procédé.

Le domaine de l'invention est le domaine de l'authentification d'un utilisateur en vue d'accéder à un poste de travail, c'est-à-dire de déverrouiller un poste de travail et d'ouvrir une session sur le système d'exploitation dudit poste de travail.

### État de la technique

L'accès d'un utilisateur à un poste de travail appartenant à un réseau informatique local, tel qu'un réseau d'entreprise, nécessite généralement une authentification de l'utilisateur. Lorsque le poste de travail se trouve dans le réseau local, l'authentification est réalisée grâce à une base de données mémorisant les droits d'accès pour chaque poste de travail et pour chaque utilisateur, tel que par exemple l'Active Directory (AD) de Windows. Dans ce cas, il est possible de réaliser une gestion dynamique des droits d'accès de chaque utilisateur pour chaque poste de travail, grâce au contrôleur de domaine.

Lorsque le poste de travail se trouve en dehors du réseau local, la gestion de l'accès audit poste de travail est réalisée grâce à un cache d'authentification local, mémorisé localement dans le poste de travail, et indiquant les droits d'accès audit poste de travail. Dans ce cas, il n'est pas possible de réaliser une gestion dynamique des droits d'accès pour les postes de travail appartenant à un réseau local et qui se trouvent en dehors dudit réseau local. En effet, dans ce cas, il n'est pas possible de modifier ou de mettre à jour des droits d'accès au poste de travail avec le contrôleur de domaine du réseau local.

On connait le brevet US11985242B1 qui décrit une solution d'authentification d'un utilisateur, avant que celui-ci déverrouille un poste de travail. La solution décrite par ce document permet une authentification flexible de l'identité de l'utilisateur, mais elle ne permet de pas de réaliser une modification ou une mise à jour, et de manière générale, une gestion dynamique et flexible de l'accès à un poste de travail lorsqu'il se trouve en dehors du réseau local. Par exemple, il ne permet pas de gérer le mot de passe permettant d'accéder au poste de travail, ni de le connaître et encore moins de le vérifier.

Un but de la présente invention est de remédier à au moins un des inconvénients précités.

Un autre but de la présente invention est de proposer une solution d'authentification d'un utilisateur pour accéder à un poste de travail appartenant à un réseau local, permettant de réaliser une gestion dynamique des droits d'accès audit poste de travail, même lorsque ledit poste de travail se trouve en dehors du réseau local.

Un autre but de la présente invention est de proposer une solution d'authentification d'un utilisateur pour accéder à un poste de travail appartenant à un réseau local, permettant de réaliser une gestion plus large et plus complète des droits d'accès audit poste de travail, même lorsque ledit poste de travail se trouve en dehors du réseau local.

### Exposé de l'invention

L'invention permet d'atteindre au moins l'un des buts précités par un procédé d'authentification d'un utilisateur sur un poste de travail appartenant à un réseau local, tel qu'un réseau d'entreprise, en vue de déverrouiller ledit poste de travail et ouvrir une session sur un système d'exploitation dudit poste de travail, ledit procédé comprenant une phase d'authentification comprenant les étapes suivantes :
- affichage, par ledit poste de travail, d'une page web d'un serveur d'identité, dit serveur IdP ;
- fourniture, par ledit utilisateur audit serveur IdP, et au travers de ladite page web, d'un identifiant dudit utilisateur et d'un mot de passe utilisateur ;
- authentification dudit utilisateur en fonction dudit identifiant et dudit mot de passe utilisateur ;
- en cas d'authentification réussie, transmission par ledit serveur IdP audit poste de travail d'un mot de passe de déverrouillage dudit poste de travail ; et
- déverrouillage dudit poste de travail avec ledit mot de passe de déverrouillage.

Ainsi, l'invention propose d'utiliser un serveur d'identité, noté serveur IdP, permettant de vérifier l'identité d'un utilisateur en fonction d'un identifiant et d'un mot de passe fournis par l'utilisateur. Cela permet d'authentifier l'utilisateur avant que celui-ci déverrouille le poste de travail et ouvre une session sur le système d'exploitation dudit poste de travail.

Surtout, et de manière différente de la solution décrite dans le brevet US11985242B1, l'invention permet de communiquer au poste de travail, le mot de passe de déverrouillage à utiliser pour déverrouiller ledit poste de travail et ouvrir une session sur le système d'exploitation dudit poste de travail. Ainsi, l'invention permet d'aller au-delà de la solution décrite dans le brevet US11985242B1.

Ainsi, l'invention permet un plus grand contrôle des droits d'accès sur des postes de travail, lorsqu'ils se trouvent en dehors du réseau local. L'invention permet de contrôler les droits d'accès, mais aussi les mots de passe de déverrouillage des postes de travail, même lorsqu'ils se trouvent en dehors du réseau local. Par exemple, l'invention permet de changer les mots de passe de déverrouillage des postes de travail, de modifier les droits d'accès aux postes de travail, et ce de manière dynamique et flexible, lorsque lesdits postes de travail se trouvent en dehors du réseau local.

Par « réseau local », on entend un réseau informatique dans lequel l'accès aux ressources est géré par un contrôleur de domaine. Chaque ressource informatique, telle que par exemple chaque poste de travail, fait partie d'un domaine informatique fermé, auquel elle est ajoutée, lorsqu'elle est ajoutée audit domaine informatique.

Dans la présente demande, un mot de passe peut être de tout type. Il peut être une chaine de caractères alphabétiques, numériques, ou alphanumériques. Le mot de passe peut alternativement être une donnée biométrique telle qu'une empreinte digitale ou une empreinte facile. Dans certains modes de réalisation, le mot de passe peut être un jeton ou un certificat, par exemple mémorisé sur un support physique de type clef USB, carte à puce, etc. L'invention n'est pas limitée à un type, ou un format, de mot de passe.

Il est à noter que le serveur IdP n'est pas le serveur d'authentification du réseau local, ou un serveur IDAAS utilisé par le réseau local, ou encore un référentiel d'identités du réseau local. Le serveur IdP peut se trouver dans le réseau local. Alternativement, le serveur IdP peut se trouver en dehors du réseau local. Dans tous les cas, il est accessible au travers d'une connexion Internet.

Suivant des modes de réalisation, le mot de passe utilisateur fourni par l'utilisateur peut être le mot de passe de déverrouillage.

Dans ce cas, l'utilisateur fournit le mot de passe de déverrouillage qui permet de déverrouiller le poste de travail. Ce mot de passe est transmis au serveur IdP pour vérification, puis retransmis par le serveur IdP au poste de travail lorsqu'il est vérifié avec succès.

En d'autres termes, même si l'utilisateur dispose du mot de passe de déverrouillage, celui-ci est communiqué au poste de travail par le serveur IdP et non par l'utilisateur lui-même.

Suivant des modes de réalisation, le mot de passe utilisateur fourni par l'utilisateur peut être un mot de passe différent du mot de passe de déverrouillage.

Dans ce cas, le mot de passe utilisateur permet d'authentifier l'utilisateur. En cas d'authentification réussie de l'utilisateur, le mot de passe de déverrouillage, différent du mot de passe utilisateur, est obtenu et est transmis par le serveur IdP au poste de travail.

Dans ce mode de réalisation, le mot de passe de déverrouillage peut être connue, ou pas, de l'utilisateur. En d'autres termes, dans ce cas, il est possible de mettre en œuvre un mécanisme de déverrouillage du poste de travail dans lequel, le mot de passe déverrouillage utilisé pour déverrouiller le poste de travail n'est pas connu de l'utilisateur. Cela permet une gestion plus sécurisée et plus sure de l'accès au poste de travail. Cela permet aussi une gestion plus flexible et plus dynamique de l'accès au poste de travail.

Dans ce mode de réalisation, le mot de passe de déverrouillage peut être fixe et non changeant, au moins pour plusieurs occurrences de déverrouillage du poste de travail.

Alternativement, il est possible de changer le mot de passe de déverrouillage pour au moins une, et en particulier chaque, occurrence de déverrouillage du poste de travail. Par exemple, il est possible de générer un mot de passe de déverrouillage à usage unique, à chaque fois que l'utilisateur souhaite déverrouiller le poste de travail.

Le mot de passe utilisateur fourni par l'utilisateur peut être un mot de passe permettant de l'identifier auprès du serveur IdP. Dans ce cas, le mot de passe utilisateur peut être associé audit utilisateur, et en particulier à un compte/profil utilisateur dudit utilisateur auprès du serveur IdP, préalablement créé au niveau du serveur IdP. Il est à noter que ce profil/compte utilisateur dudit utilisateur au niveau du serveur IdP, peut être indépendant de tout autre compte dudit utilisateur dans le réseau local, ou au niveau du poste de travail.

Alternativement, le mot de passe utilisateur fourni par l'utilisateur peut être un mot de passe associé à l'utilisateur dans le réseau local, par exemple un mot de passe d'un compte/profil dudit utilisateur dans le réseau local. Dans ce cas, le serveur IdP peut avoir besoin de contacter une référence d'identité dudit réseau local, tel que par exemple un contrôler de domaine ou un serveur d'authentification dudit réseau local, pour l'authentification de l'utilisateur.

Suivant encore une autre alternative, le mot de passe utilisateur fourni par l'utilisateur peut être un mot de passe auprès de tout autre serveur d'identité ou d'authentification, tel que par exemple un serveur IDAAS (Identity As A Service), un serveur d'authentification tierce, un serveur d'authentification social. Dans ce cas, le serveur IdP peut avoir besoin de contacter ledit serveur tierce pour réaliser l'authentification de l'utilisateur.

Dans ce cas, l'utilisateur peut être redirigé vers ledit serveur tierce. Il est authentifié avec un mot de passe ou d'autres moyens, et le serveur tierce renvoi une preuve d'authentification au serveur IdP. La redirection peut être visible par l'utilisateur : redirection web (et preuve d'authentification Oauth (OIDC) ou SAML ). Dans ce cas, le mot de passe peut ne pas passer par l'IDP mais uniquement par le serveur tierce. Alternativement, la redirection peut être invisible pour l'utilisateur, par exemple en utilisant le protocole RADIUS. Dans ce cas, le serveur IDP transmet le mot de passe au serveur RADIUS externe qui répond 'oui' ou 'non' au serveur IdP en fonction du résultat de l'authentification.

Suivant des modes de réalisation, le mot de passe de déverrouillage peut être connu et mémorisé par le serveur IdP.

Dans ce cas, en cas d'authentification réussi, le serveur IdP peut transmettre le mot de passe de déverrouillage au poste de travail.

Le mot de passe de déverrouillage peut être connu du serveur IdP car il peut être fourni par l'utilisateur, par exemple lors de l'étape de fourniture de la phase d'authentification. Alternativement, le mot de passe de déverrouillage peut être fourni par l'utilisateur préalablement à la phase d'authentification, par exemple lors d'une étape d'enregistrement dudit utilisateur auprès dudit serveur IdP. Alternativement, le mot de passe de déverrouillage peut être fourni par l'utilisateur lors d'une itération précédente de la phase d'authentification.

Le mot de passe de déverrouillage peut être connu du serveur IdP car il peut être fourni par un administrateur du réseau local, préalablement à la phase d'authentification.

Le mot de passe de déverrouillage peut être connu du serveur IdP car il peut être obtenu par ledit serveur IdP, par exemple auprès d'un serveur d'authentification du réseau local, ou de toute autre référentiel d'identité dudit réseau local, préalablement à la phase d'authentification.

Suivant des modes de réalisation, la phase d'authentification peut comprendre une étape d'obtention du mot de passe de déverrouillage par le serveur IdP auprès d'une entité tierce.

Dans ce cas, le mot de passe de déverrouillage n'est pas connu du serveur IdP et doit être obtenu lors de l'exécution de la phase d'authentification.

L'entité tierce peut être tout type d'entité.

Par exemple, l'entité tierce peut être un serveur d'authentification du réseau local. Dans ce cas, la communication entre le serveur IdP et le serveur d'authentification du réseau local peut être chiffré.

Par exemple, l'entité tierce peut être un administrateur réseau local.

Suivant encore un autre mode de réalisation, le mot de passe de déverrouillage peut être demandé à l'utilisateur lui-même.

Dans ce cas, le serveur IdP demande ledit mot de passe audit utilisateur lors de la phase d'authentification, par exemple au travers de la page web dudit serveur IdP.

Quel que soit le mode de réalisation, la phase d'authentification peut comprendre un chiffrage du mot de passe de déverrouillage avant sa transmission au poste de travail.

Le chiffrage du mot de passe peut être réalisé selon toute technique connue. Par exemple, le mot de passe de déverrouillage peut être chiffré avec une clef publique associée au poste de travail, et en particulier à son processus d'authentification, préalablement communiquée au serveur IdP.

Suivant des modes de réalisation, le mot de passe de déverrouillage peut être changeant. Dans ce cas, le procédé selon l'invention, et en particulier la phase d'authentification, peut comprendre une étape de mise à jour, ou un changement, du mot de passe de déverrouillage.

Cette étape de mise à jour du mot de passe de déverrouillage peut être réalisée après la phase d'authentification, de préférence en cas d'authentification réussie. Cette étape de mise à jour peut être réalisée après l'étape de transmission par le serveur IdP au poste de travail dudit mot de passe de déverrouillage, en cas d'authentification réussie.

L'étape de mise à jour peut être réalisée à chaque déverrouillage du poste de travail, ou à fréquence prédéterminée.

En cas de changement du mot de passe de déverrouillage, le nouveau mot de passe de déverrouillage peut être mémorisé au niveau du serveur IdP en association avec l'utilisateur et/ou le poste de travail.

De plus, le nouveau mot de passe de déverrouillage peut être transmis au serveur d'authentification du réseau local pour mise à jour dudit mot de passe de déverrouillage au niveau dudit serveur d'authentification.

Le changement du mot de passe de déverrouillage peut être réalisé de manière aléatoire de sorte que le nouveau mot de passe est généré de manière aléatoire. Alternativement, le nouveau mot de passe de déverrouillage peut être obtenu suivant une relation prédéterminée, et/ou en fonction d'une donnée prédéterminée.

Le changement du mot de passe de déverrouillage peut être réalisé au niveau du poste de travail. Dans ce cas, le nouveau mot de passe est transmis au serveur IdP pour mémorisation, par exemple de manière chiffrée.

Le changement du mot de passe de déverrouillage peut être réalisé au niveau du serveur IdP. Dans ce cas, le nouveau mot de passe est transmis au poste de travail pour mémorisation, par exemple de manière chiffrée.

Suivant des modes de réalisation, lorsque l'utilisateur est connu du serveur IdP, l'étape d'authentification peut être réalisée par ledit serveur IdP.

L'utilisateur peut être connu du serveur IdP car il a déjà utilisé le serveur IdP lors d'une réalisation précédente de la phase d'authentification, lors de laquelle, ou suite à laquelle, un compte utilisateur à été créé pour ledit utilisateur et mémorisé au niveau dudit serveur IdP.

L'utilisateur peut être connu du serveur IdP car il s'est enregistré auprès dudit serveur IdP, lors d'une étape d'enregistrement.

L'utilisateur peut être connu du serveur IdP car il a été enregistré, par une entité tierce, auprès dudit serveur IdP lors d'une étape d'enregistrement. L'enregistrement de l'utilisateur peut être réalisé par un administrateur du réseau local, par exemple de manière manuelle. L'enregistrement de l'utilisateur peut être réalisé par un serveur d'authentification local, ou par un référentiel d'identité du réseau local, tel que par exemple un AD du réseau local. L'enregistrement peut être réalisé par une synchronisation dudit serveur IdP avec le serveur d'authentification, respectivement avec ledit référentiel d'identité.

Suivant des modes de réalisation, optionnellement, le procédé selon l'invention peut comprendre une telle étape d'enregistrement préalablement à la phase d'authentification

Suivant des modes de réalisation, l'utilisateur n'est pas connu du serveur IdP. Dans ce cas, l'étape d'authentification peut être réalisée par une entité d'authentification tierce, en particulier par le serveur d'authentification du réseau local.

Dans ce cas, le serveur IdP communique à ladite entité l'identifiant et le mot de passe fournis par l'utilisateur pour authentification. Si l'authentification est validée par l'entité tierce, alors ladite entité tierce communique audit serveur IdP une preuve d'authentification réussie.

Dans ce cas, le serveur IdP peut communiquer avec l'entité tierce suivant toute technique de communication adéquate.

De manière avantageuse, le serveur IdP peut communiquer avec l'entité tierce, par exemple le serveur d'authentification du réseau local, en utilisant une communication sécurisée. Une telle communication sécurisée peut être réalisée au travers d'un VPN, par exemple à l'initiative du serveur IdP vers le réseau local. Alternativement, une telle communication sécurisée peut être réalisée en utilisant une passerelle de communication, dans le réseau local, établissant une communication sécurisée bidirectionnelle permettant d'échanger des données entre le serveur IdP et le serveur d'authentification dans le réseau local.

Bien entendu, ces exemples ne sont nullement limitatifs et d'autres techniques de communication peuvent être utilisées.

Dans ce cas, suite à une authentification réussie, optionnellement, le procédé selon l'invention peut comprendre, pendant ou après la phase d'authentification, une étape de création d'un compte utilisateur, pour ledit utilisateur, au niveau dudit serveur IdP.

Le compte utilisateur peut être créé avec l'identifiant et le mot de passe fournis par l'utilisateur.

Alternativement, le compte utilisateur peut être créé avec un autre identifiant et/ou un autre mot de passe que ceux fournis par l'utilisateur. Dans ce cas ledit autre identifiant et/ou ledit autre mot de passe sont fournis à l'utilisateur pour utilisation ultérieure, par exemple lors d'une itération ultérieure de la phase d'authentification.

Suivant des modes de réalisation, l'étape d'authentification peut réaliser une authentification par une méthode d'authentification forte.

Bien entendu, l'étape d'authentification peut réaliser une authentification selon toute autre technique d'authentification.

Suivant des modes de réalisation, le procédé selon l'invention peut comprendre une étape de mise en place d'une authentification par une méthode d'authentification forte, suite à l'étape d'authentification.

Suivant des modes de réalisation, l'utilisateur peut être déjà connu du poste de travail. Dans ce cas, le compte utilisateur associé à l'utilisateur est utilisé pour lui ouvrir sa session sur ledit poste de travail.

Suivant des modes de réalisation, l'utilisateur peut ne pas être connu du poste de travail. Cela peut arriver par exemple lorsque l'utilisateur n'a jamais utilisé ce poste de travail.

Dans ce cas, la phase d'authentification peut comprendre une étape de création d'un compte utilisateur sur le poste de travail, suite à l'étape d'authentification et avant l'étape de déverrouillage du poste de travail. La création d'un compte utilisateur sur le poste de travail peut être réalisé de manière classique et standard en fonction des éléments communiqués par le serveur IdP.

Optionnellement, le procédé selon l'invention peut en outre comprendre une étape de transmission, par le serveur IdP au poste de travail, d'une preuve d'authentification propre au serveur IdP, pouvant être utilisée pour accéder à au moins une application SaaS.

Dans ce cas, le serveur IdP est préalablement provisionné auprès de l'applications SaaS et la preuve d'authentification fournie par le serveur IdP peut être utilisé pour authentifier l'utilisateur auprès de ladite application SaaS.

La preuve d'authentification peut être de type, telle que par exemple un jeton d'authentification, un certificat d'authentification, etc.

Suivant des modes de réalisation, la phase d'authentification peut comprendre, avant l'étape de transmission du mot de passe de déverrouillage au poste de travail, une étape de vérification d'une condition d'accès associée audit utilisateur ou audit poste de travail, tel qu'une condition relative au lieu d'accès ou à l'horaire d'accès.

Par exemple, une telle condition d'accès peut être relative au profil de l'utilisateur, lorsque le réseau local accorde des droits d'accès différents pour différents profils.

Alternativement ou en plus, une telle condition d'accès peut être relative à une localisation géographique de l'utilisateur, lorsque le réseau local accorde des droits d'accès différents pour différentes localisation géographiques.

Alternativement ou en plus, une telle condition d'accès peut être relative à une heure d'accès, lorsque le réseau local accorde des droits d'accès différents pour différentes heures.

Bien entendu, il est possible de définir une ou plusieurs autres conditions que celles définies plus haut, qui sont données à titre d'exemples non limitatifs.

Suivant un autre aspect de la présente invention, il est proposé un programme d'ordinateur non-transitoire comprenant des instructions informatiques, qui lorsqu'elles sont exécutées, mettent en œuvre les étapes du procédé selon l'invention.

Le programme d'ordinateur peut être en langage machine, en C, C++, JAVA, Python, et plus généralement tout type de langage informatique.

Le programme d'ordinateur peut être un unique programme d'ordinateur, ou un ensemble de plusieurs programmes d'ordinateurs.

En particulier, le programme d'ordinateur peut comprendre :
- un client d'authentification associé au, et en particulier installé dans le, poste de travail, et
- un serveur d'identité, dit serveur IdP, en communication avec ledit client d'authentification.

Suivant un autre aspect de la présente invention, il est proposé un système d'authentification d'un utilisateur sur un poste de travail, en vue déverrouiller ledit poste de travail et ouvrir une session sur un système d'exploitation dudit poste de travail, ledit système comprenant :
- un client d'authentification installé sur ledit poste de travail, et pouvant être exécuté avant déverrouillage dudit poste de travail ; et
- un serveur d'identité, dit serveur IdP ;
configurés pour mettre en œuvre le procédé selon l'invention.

Le système selon l'invention peut comprendre, en termes de moyen(s) technique(s), et/ou de configuration(s), et/ou de programme(s) d'ordinateur, une combinaison quelconque des caractéristiques optionnelles décrites plus haut en référence au procédé selon l'invention et qui ne sont pas reprises ici par soucis de concision.

Suivant des modes de réalisation, le système selon l'invention peut comprendre une entité tierce d'authentification pour authentifier l'utilisateur et/ou fournir le mot de passe de déverrouillage du poste de de travail.

Suivant des modes de réalisation, le système selon l'invention peut comprendre un module pour générer un mot de passe de déverrouillage, disposé au niveau du poste de travail ou au niveau du serveur IdP.

### Description des figures et modes de réalisation

D'autres avantages et caractéristiques apparaîtront à l'examen de la description détaillée d'un mode de réalisation nullement limitatif, et des dessins annexés sur lesquels :
- la FIGURE 1 est une représentation schématique d'un exemple de réalisation non limitatif d'un procédé d'authentification selon l'invention ; et
- la FIGURE 2 est une représentation schématique d'un exemple de réalisation non limitatif d'un procédé d'authentification selon l'invention ; et
- la FIGURE 3 est une représentation schématique d'un exemple de réalisation non limitatif d'un système d'authentification selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures, les éléments communs à plusieurs figures conservent la même référence.

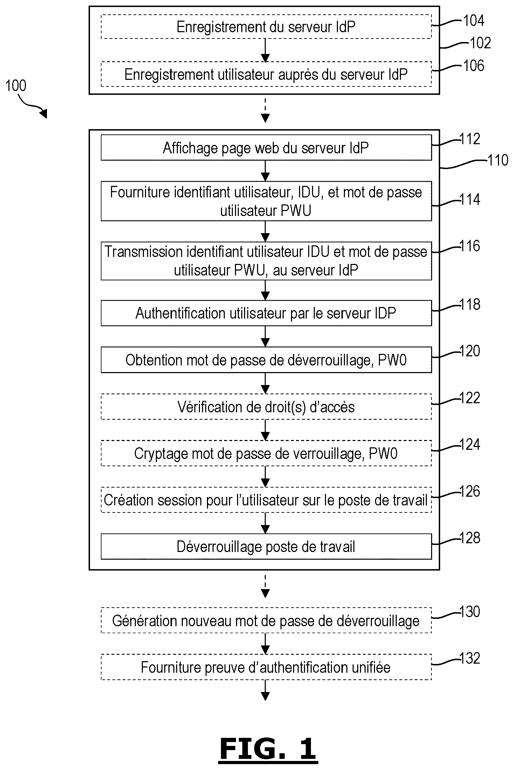

La FIGURE 1 est une représentation schématique d'un exemple de réalisation non limitatif d'un procédé d'authentification selon l'invention.

Le procédé 100, représenté sur la FIGURE 1, peut être mis en œuvre pour authentifier un utilisateur en vue d'accéder à un poste de travail, c'est-à-dire en vue de déverrouiller ledit poste de travail et lancer une session sur le système d'exploitation dudit poste de travail. En particulier, le procédé 100 peut être utilisé pour authentifier un utilisateur d'un réseau informatique, dit réseau local, à un poste de travail appartenant audit réseau local, lorsque ledit poste de travail se trouve en dehors dudit réseau local.

Le poste de travail peut être de tout type, tel qu'un ordinateur fixe, un ordinateur portable, un Smartphone, une tablette, un serveur, etc.

Le procédé 100 utilise un serveur d'identité, noté serveur IdP. Il est à noter que le serveur IdP n'est pas le serveur d'authentification du réseau local, ou un serveur IDAAS utilisé par le réseau local, ou encore un référentiel d'identité du réseau local. Le serveur IdP peut se trouver dans le réseau local. Alternativement, le serveur IdP peut se trouver en dehors du réseau local. Dans tous les cas, il est accessible pour le poste de travail au travers d'une connexion Internet.

Le procédé 100 peut comprendre, de manière optionnelle une phase d'enregistrement 102.

La phase d'enregistrement 102 du procédé 100 peut comprendre une étape 104, optionnelle, d'enregistrement du serveur IdP auprès d'un serveur d'authentification du réseau local, d'un serveur IDAAS du réseau local, ou d'un référentiel d'identité du réseau local. Lors de cette étape d'enregistrement 104, le serveur IdP obtient une preuve d'authentification lui permettant de se connecteur audit serveur d'authentification, respectivement audit référentiel d'identité.

La preuve d'authentification obtenue lors de l'étape 104 est mémorisée au niveau du serveur IdP pour réutilisation ultérieure. La preuve d'authentification obtenue lors de l'étape 104 peut être un jeton d'authentification, un serveur d'authentification, etc.

Cette étape 104 est optionnelle et n'est pas nécessaire pour la mise en œuvre du procédé 100.

La phase d'enregistrement 102 du procédé 100 peut comprendre une étape 106, optionnelle, d'enregistrement de l'utilisateur au niveau du serveur IdP. Lors de cette étape d'enregistrement optionnelle 106, un compte utilisateur est créé pour l'utilisateur et mémorisé sur le serveur IdP.

Lors de cette étape 106 un identifiant et un mot de passe sont attribués à l'utilisateur. L'identifiant peut être identique à celui qui sera utilisé pour déverrouiller le poste de travail. Alternativement, le mot de passe peut être différent de celui qui sera utilisé pour déverrouiller le poste de travail.

Cette étape 106 est optionnelle et n'est pas nécessaire pour la mise en œuvre du procédé 100.

Le procédé 100 comprend ensuite une phase d'authentification 110.

Cette phase d'authentification 110 peut être réalisée immédiatement après la phase d'enregistrement optionnelle 102. Alternativement, la phase d'authentification 110 peut être réalisée bien après la phase d'enregistrement optionnelle 102.

Dans l'exemple de la FIGURE 1, on considère que l'utilisateur est connu du serveur IdP. En d'autres termes, on considère qu'un compte utilisateur existe au niveau du serveur IdP pour cet utilisateur. Un tel compte utilisateur peut avoir été créé lors de l'étape optionnelle 106. Alternativement, un tel compte utilisateur peut avoir été créé lors d'une occurrence précédente d'une phase d'authentification.

La phase d'authentification 110 comprend une étape 112 lors de laquelle un client d'authentification installé sur le poste de travail est exécuté pour afficher une page web du serveur IdP.

Pour ce faire, le poste de travail peut être configuré pour lancer le client d'authentification de manière automatisée lorsqu'il est mis sous tension. Alternativement, le poste de travail peut être configuré pour proposer à l'utilisateur de lancer, ou de choisir, ledit client d'authentification manuellement.

Il est à noter que, à ce stade, l'utilisateur n'a pas encore déverrouillé le poste de travail et aucune cession n'est ouverte pour cet utilisateur sur le système d'exploitation du poste de travail. L'utilisateur se trouve face à une page d'authentification du poste de travail en vue de déverrouiller ledit poste de travail.

Lors d'une étape 114, l'utilisateur fournit son identifiant, IDU, et son mot de passe utilisateur, PWU, sur la page web du serveur IdP affiché par le poste de travail.

L'identifiant utilisateur IDU et le mot de passe utilisateur PWU fournis lors de l'étape 114 sont ceux associés au compte dudit utilisateur mémorisé au niveau du serveur IdP.

L'identifiant utilisateur IDU et le mot de passe utilisateur PWU fournis à l'étape 114 sont transmis au serveur IdP, lors d'une étape 116.

On rappelle que, dans l'exemple de la FIGURE 1, l'utilisateur est connu du serveur IdP et possède un compte utilisateur auprès du serveur IdP.

Lors d'une étape 118, le serveur IdP réalise une authentification de l'utilisateur en utilisant l'identifiant utilisateur IDU et le mot de passe PWU utilisateur qu'il a reçus lors de l'étape 116. Le serveur IdP peut utiliser toute technique d'authentification. Par exemple, le serveur IdP peut utiliser une méthode d'authentification forte, telle qu'une méthode d'authentification à deux facteurs.

Si l'authentification échoue alors il est mis fin au procédé à l'étape 118. Optionnellement, le résultat négatif de l'authentification peut être communiqué au poste de travail. Optionnellement, un message d'erreur peut être affiché au niveau du poste de travail, par exemple par le client d'authentification qui a été lancé à l'étape 112.

Si l'utilisateur est authentifié avec succès à l'étape 118, le serveur IdP obtient, lors de l'étape 120, un mot de passe de déverrouillage, PW0, associé à cet utilisateur et au poste de travail, et pouvant être utilisé pour déverrouiller ledit poste de travail et ouvrir une session pour ledit utilisateur sur le système d'exploitation dudit poste de travail.

Suivant une première variante, le mot de passe de déverrouillage PW0 peut être le mot de passe utilisateur PWU fourni par l'utilisateur. Dans ce cas, optionnellement, le serveur IdP peut mémoriser ledit mot de passe utilisateur PWU comme mot de passe de déverrouillage PW0 dans le compte de l'utilisateur, si ce n'est pas déjà le cas.

Suivant une deuxième variante, le mot de passe de déverrouillage PW0 peut être :
- différent du mot de passe utilisateur PWU fourni par l'utilisateur ; et
- déjà connu par le serveur IdP, par exemple mémorisé avec un compte utilisateur dudit utilisateur.
Par exemple, le mot de passe de déverrouillage PW0 peut avoir été fourni lors de l'étape d'enregistrement optionnelle 106. Suivant un autre exemple, le mot de passe de déverrouillage PW0 peut avoir été obtenu lors d'une itération précédente de la phase d'authentification 110.

Suivant une troisième variante, le mot de passe de déverrouillage PW0 peut être :
- différent du mot de passe utilisateur PWU fourni par l'utilisateur ; et
- non connu du serveur IdP.
Dans ce cas, le serveur IDP peut demander, lors de l'étape 120, ledit mot de passe de déverrouillage PW0 à l'utilisateur, par exemple au travers de la page web. Le mot de passe de déverrouillage PW0 peut alors être fourni par l'utilisateur. Optionnellement, le mot de passe de déverrouillage PW0 ainsi obtenu peut être mémorisé dans le compte utilisateur de l'utilisateur.

Suivant une quatrième variante, le mot de passe de déverrouillage PW0 peut être :
- différent du mot de passe utilisateur PWU fourni par l'utilisateur ; et
- non connu du serveur IdP.
Dans ce cas, le serveur IDP peut demander, lors de l'étape 120, ledit mot de passe de déverrouillage PW0 à une entité externe. Cette entité externe peut par exemple être un administrateur du réseau local auquel appartient le poste de travail. Cette entité externe peut par exemple être un serveur d'authentification du réseau local, un serveur IDAAS utilisé par ledit réseau local, ou encore un référentiel d'identité dudit réseau local, tel que par exemple un AD dudit réseau local. Cette entité externe peut être , de manière générale, toute entité pouvant authentifier l'utilisateur et fournir le mot de passe de déverrouillage PW0 du poste de travail, et auprès duquel le serveur IdP est enregistré, par exemple lors de l'étape d'enregistrement optionnelle 104. Le mot de passe de déverrouillage PW0 peut alors être fourni par ladite entité externe. Optionnellement, le mot de passe de déverrouillage PW0 ainsi obtenu peut être mémorisé dans le compte de l'utilisateur sur le serveur IdP.

Quelle que soit la variante, le serveur IdP a obtenu le mot de passe de déverrouillage PW0 associé à cet utilisateur lors de l'étape 120.

Lors d'une étape 122, optionnelle, les droits d'accès associé à cet utilisateur peuvent être testés, par exemple en fonction d'une localisation géographique de l'utilisateur, et/ou de l'heure courante pour accéder au poste de travail, et/ou d'un profil utilisateur, etc.

Ces droits d'accès peuvent être fournis par un serveur d'authentification, un serveur IDAAS, ou tout autre référentiel d'identité du réseau local.

Ces droits d'accès peuvent être indiqués au serveur IdP par un administrateur du réseau local, ou toute autre entité.

Lors d'une étape 124, si rien n'empêche l'accès de l'utilisateur au poste de travail, le serveur IdP transmet audit poste de travail le mot de passe de verrouillage PW0, obtenu à l'étape 120.

Le mot de passe de verrouillage PW0 peut être crypté avant sa transmission, selon toute technique de cryptage adéquate, par exemple avec une clef publique associée au poste de travail, ou au client d'authentification lancé à l'étape 112, et préalablement communiquée au serveur IdP. Dans ce cas, le mot de passe de déverrouillage crypté reçu par au niveau du poste de travail est décrypté, par exemple avec la clef privée associée à la clef publique utilisée pour le cryptage.

Lors d'une étape 126, optionnelle, le poste de travail peut créer une session pour cet utilisateur, si aucune session n'existe sur ce poste de travail pour cet utilisateur. La création de la session se fait de manière classique, par exemple par un agent installé dans le poste de travail. Le mot de passe de déverrouillage est attribué à cet utilisateur pour la session créée.

Bien entendu, si une session existe pour cet utilisateur sur le poste de travail, cette étape 126 n'est pas réalisée.

Lors d'une étape 128, le mot de passe de déverrouillage PW0 reçu par le poste de travail est utilisé pour déverrouiller le poste de travail et ouvrir une session sur le système d'exploitation dudit poste de travail.

Le déverrouillage se fait de manière classique par saisie du mot de passe sur le client d'authentification du poste de travail.

La saisie du mot de passe peut être réalisée de manière automatisée et transparente pour l'utilisateur, par exemple par le client d'authentification associé au serveur IdP et exécuté lors de l'étape 112, ou par le client d'authentification du poste de travail.

Le mot de passe de déverrouillage PW0 peut être fixe et non changeant.

Alternativement, le mot de passe de déverrouillage PW0 peut être changé, par exemple à la demande de l'utilisateur, à la demande du serveur IdP, ou à une fréquence prédéterminée. Suivant un exemple de réalisation, le mot de passe de déverrouillage PW0 peut être changé à chaque déverrouillage du poste de travail.

Ainsi, le procédé 100 peut comprendre, après la phase d'authentification 110, une étape 130, optionnelle, de génération d'un nouveau mot de passe de déverrouillage, noté PW0', pour cet utilisateur pour ce poste de travail.

Cette étape optionnelle 130 peut être réalisée au niveau du poste de travail. Dans ce cas, le nouveau mot de passe de déverrouillage est mémorisé dans ledit poste de travail en association avec l'utilisateur, et transmis au serveur IdP pour mémorisation. Le serveur IdP peut transmettre le nouveau mot de passe de déverrouillage PW0' au serveur d'authentification du réseau local, ou au référentiel d'identité du réseau local, pour mémorisation.

Cette étape optionnelle 130 peut être réalisée au niveau du serveur IdP. Dans ce cas, le nouveau mot de passe de déverrouillage PW0' est mémorisé au niveau du serveur IdP et transmis d'une part au poste de travail et d'autre part au serveur d'authentification du réseau local, ou au référentiel d'identité du réseau local, pour mémorisation.

La génération du nouveau mot de passe peut être réalisée selon toute technique connue.

Le procédé 100 peut en outre comprendre, après la phase d'authentification 110, une étape 132, optionnelle, de fourniture par le serveur IdP, au poste de travail d'une preuve d'authentification unifiée pour cet utilisateur, par exemple sous la forme d'un jeton d'authentification, par exemple un jeton SSO, ou d'un certificat d'authentification.

Cette preuve d'authentification peut être utilisée lors de la session de l'utilisateur pour accéder à d'autres ressources, telles que des applications SaaS accessible au travers d'un navigateur web, ou autre.

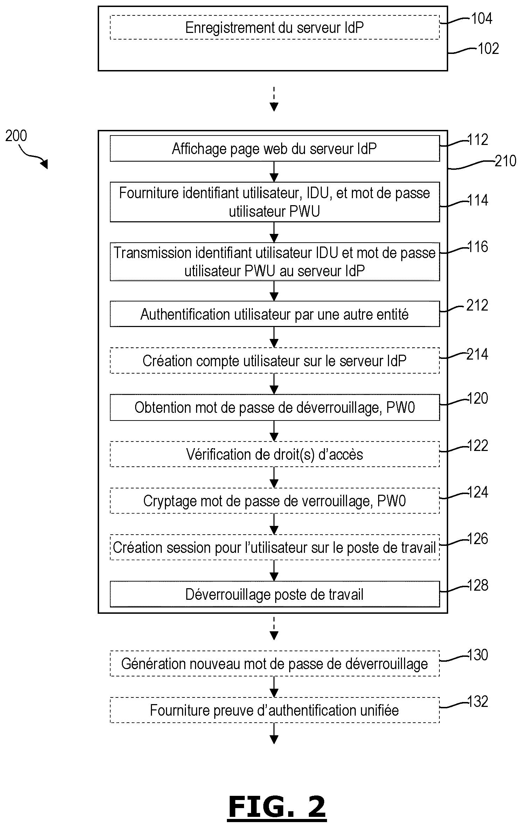

La FIGURE 2 est une représentation schématique d'un autre exemple de réalisation non limitatif d'un procédé d'authentification selon l'invention.

Dans le procédé 200, représenté sur la FIGURE 2, on considère, à la différence du procédé 100, que l'utilisateur qui souhaite déverrouiller le poste de travail n'est pas connu du serveur IdP. En d'autres termes, le serveur IdP est utilisé par un nouvel utilisateur.

Le procédé 200 peut comprendre l'étape optionnelle 104 du procédé 100, mais par l'étape optionnelle 106.

Le procédé 200 comprend une phase d'authentification 210 comprenant les étapes 112 à 116, telles que décrites en référence au procédé 100.

Cependant, dans le procédé 200, l'authentification de l'utilisateur ne peut pas être réalisée par le serveur IdP puisque que ce dernier ne connaît pas l'utilisateur. Ainsi, après l'étape 116, la phase d'authentification 210 du procédé 200 comprend une étape 212 d'authentification de l'utilisateur par une autre entité que le serveur IdP. Cette autre entité peut être un serveur d'authentification du réseau local, un référentiel d'identité du réseau local, ou un serveur IDAAS utilisé par le réseau local, et auprès de qui le serveur IdP a été préalablement provisionné, par exemple lors de l'étape optionnelle 104.

Lors de cette étape 212, le serveur IdP transmet l'identifiant utilisateur IDU et le mot de passe utilisateur PWU reçus à l'étape 116 à ladite autre entité pour authentification. Il est à noter que, dans le procédé 200, l'identifiant utilisateur IDU et le mot de passe utilisateur PWU, reçus à l'étape 116, ne sont pas associés à un compte utilisateur dudit utilisateur auprès du serveur IdP puisque ce dernier ne connait pas ledit utilisateur. L'identifiant utilisateur IDU et le mot de passe utilisateur PWU, reçus à l'étape 116, sont associés audit utilisateur auprès de ladite autre entité sollicitée pour authentifier l'utilisateur.

Lorsque l'authentification échoue, il est mis fin au procédé 200 à l'étape 212. Optionnellement, une donnée d'échec d'authentification est transmise au poste de travail, et/ou un message d'erreur est affiché par le poste de travail, ou par le client d'authentification lancé à l'étape 112, à l'attention de l'utilisateur.

Lorsque l'authentification est réalisée avec succès lors de l'étape 212, la phase d'authentification peut comprendre une étape 214, optionnelle, de création d'un compte utilisateur sur le serveur IdP pour cet utilisateur, avec le même couple identifiant IDU /mot de passe PWU que ceux fournis par l'utilisateur, ou un autre couple identifiant/mot de passe. Dans ce dernier, le couple identifiant / mot de passe peut être communiqué à l'utilisateur par tout moyen connu et adéquat.

Puis, le procédé 200 continue à l'étape 120 et les suivantes décrites en référence au procédé 100 de la FIGURE 1.

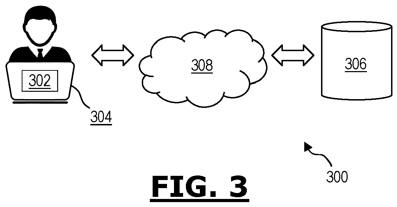

La FIGURE 3 est une représentation schématique d'un exemple de réalisation non limitatif d'un système d'authentification selon l'invention.

Le système 300 peut être utilisé pour mettre en œuvre le procédé selon l'invention, et en particulier l'un quelconque des procédés 100 ou 200.

Le système 300 comprend un client d'authentification 302 installé sur un poste de travail 304.

Le système 300 comprend un serveur d'identité, serveur IdP, 306 en communication avec le client d'authentification 302, au travers d'une liaison filaire ou sans, au travers d'un réseau de communication 308, par exemple de type Internet.

Le client d'authentification 302 et le serveur IdP sont configurés, matériellement et/ou logiciellement, pour mettre en œuvre un procédé selon l'invention, et en particulier le procédé 100 ou le procédé 200.

En particulier, le client d'authentification 302 peut être configuré pour réaliser une partie ou la totalité des étapes 106, 112-116, 126 et 128 des procédés 100 ou 200.

En particulier, le serveur IdP 306 peut être configuré pour réaliser une partie ou la totalité des étapes 104, 118-124, 130 et 132 du procédé 100, ou les étapes 104, 212-214, 120-124, 130-132 du procédé 200.

Le serveur IdP 306 peut comprendre les modules suivants (non représentés) :
- un module de communication,
- optionnellement, un module d'authentification d'un utilisateur ;
- optionnellement, un module de cryptage ;
- optionnellement, un module de génération de mot de passe.

Le client d'authentification 302 installé sur le poste de travail 304 peut comprendre les modules suivants (non représentés) :
- un module de communication,
- optionnellement, un module de cryptage ;
- optionnellement, un module de génération de mot de passe.

De manière générale, l'invention n'est pas limitée aux exemples décrits qui sont donnés à titre d'illustration. De nombreuses variantes peuvent être imaginées aux exemples donnés ci-dessus sans sortir du cadre de l'invention telle que définie dans les revendications principales.

## Revendications

1. Procédé (100;200) d'authentification d'un utilisateur sur un poste de travail (304) appartenant à un réseau local, tel qu'un réseau d'entreprise, en vue de déverrouiller ledit poste de travail (304) et ouvrir une session sur un système d'exploitation dudit poste de travail (304), ledit procédé (100;200) comprenant une phase d'authentification (110;210) comprenant les étapes suivantes :
- affichage (112), par ledit poste de travail (304), d'une page web d'un serveur d'identité (306), dit serveur IdP ;
- fourniture, par ledit utilisateur audit serveur IdP (306), et au travers de ladite page web, d'un identifiant dudit utilisateur et d'un mot de passe utilisateur ;
- authentification (118;212) dudit utilisateur en fonction dudit identifiant et dudit mot de passe utilisateur ;
- en cas d'authentification réussie, transmission par ledit serveur IdP (306) audit poste de travail (304) d'un mot de passe de déverrouillage dudit poste de travail (304) ; et
- déverrouillage dudit poste de travail (304) avec ledit mot de passe de déverrouillage.

2. Procédé (100;200) selon la revendication précédente, **caractérisé en ce que**, le mot de passe utilisateur fourni par l'utilisateur est le mot de passe de déverrouillage.

3. Procédé (100;200) selon la revendication 1, **caractérisé en ce que**, le mot de passe utilisateur fourni par l'utilisateur est un mot de passe différent du mot de passe de déverrouillage.

4. Procédé (100;200) selon la revendication précédente, **caractérisé en ce que** le mot de passe de déverrouillage est connu et mémorisé par le serveur IdP.

5. Procédé (100;200) selon la revendication 3, **caractérisé en ce que** la phase d'authentification (110;210) comprend une étape (120) d'obtention du mot de passe de déverrouillage par le serveur IdP (306) auprès d'une entité tierce.

6. Procédé (100;200) selon l'une quelconque des revendications précédentes, **caractérisé en ce qu'**il comprend un chiffrage du mot de passe de déverrouillage avant sa transmission au poste de travail (304).

7. Procédé (100;200) selon l'une quelconque des revendications précédentes, **caractérisé en ce qu'**il comprend une étape (130) de mise à jour, ou un changement, du mot de passe de déverrouillage.

8. Procédé (100) selon l'une quelconque des revendications précédentes, **caractérisé en ce que**, lorsque l'utilisateur est connu du serveur IdP (306), l'étape d'authentification (118) est réalisée par ledit serveur IdP (306).

9. Procédé (200) selon l'une quelconque des revendications précédentes, **caractérisé en ce que**, lorsque l'utilisateur n'est pas connu du serveur IdP (306), l'étape d'authentification (212) est réalisée par une entité d'authentification tierce, en particulier par le serveur d'authentification du réseau local.

10. Procédé (100;200) selon l'une quelconque des revendications précédentes, **caractérisé en ce que** la phase d'authentification (110;210 comprend une étape (126) de création d'un compte utilisateur sur le poste de travail (306), suite à l'étape d'authentification (112;212) et avant l'étape (128) de déverrouillage du poste de travail (304).

11. Procédé (100;200) selon l'une quelconque des revendications précédentes, **caractérisé en ce qu'**il comprend en outre, une étape (132)) de transmission, par le serveur IdP (306) au poste de travail (304), d'une preuve d'authentification propre au serveur IdP (306), pouvant être utilisée pour accéder à au moins une application SaaS.

12. Procédé (100;200) selon la revendication précédente, **caractérisé en ce qu'**il comprend en outre, avant l'étape de transmission du mot de passe de déverrouillage au poste de travail (304), une étape (122) de vérification d'une condition d'accès associée audit utilisateur ou audit poste de travail (304), tel qu'une condition relative au lieu d'accès ou à l'horaire d'accès.

13. Programme d'ordinateur non-transitoire comprenant des instructions informatiques, qui lorsqu'elles sont exécutées, mettent en œuvre les étapes du procédé (100;200) selon l'une quelconque des revendications 1 à 12.

14. Système (300) d'authentification d'un utilisateur sur un poste de travail (304), en vue déverrouiller ledit poste de travail (304) et ouvrir une session sur un système d'exploitation dudit poste de travail (304), ledit système (300) comprenant :
- un client d'authentification (302) installé sur ledit poste de travail (306), et pouvant être exécuté avant déverrouillage dudit poste de travail (304) ; et
- un serveur d'identité (306), dit serveur IdP ;
configurés pour mettre en œuvre le procédé (100;200) selon l'une quelconque des revendications 1 à 12.
